# EUROPÄISCHE PATENTANMELDUNG

(11) **EP 1 265 058 A2**
(43) Veröffentlichungstag der Anmeldung: **11.12.2002**
(21) Anmeldenummer: 02450119.9
(22) Anmeldetag: 16.05.2002
(51) Int. Cl.: G01J 3/12

(54) **Verfahren und Messeinrichtung zur Bestimmung eines Lumineszenz-, Fluoreszenz- oder Absorptionsparameters einer Probe**

(30) Priorität: 06.06.2001 AT 8822001
(71) Anmelder: Eurolab Instruments GmbH, 5020 Salzburg (AT)
(72) Erfinder: Wieser, Manfred, 5020 Salzburg (AT)
(74) Vertreter: Babeluk, Michael, Dipl.-Ing. Mag.

(57) **Zusammenfassung**

Die Erfindung betrifft ein Verfahren und eine Messeinrichtung zur Bestimmung zumindest eines Lumineszenz-, Fluoreszenz- oder Absorptionsparameters einer Probe (10), mit einer Anregungslichtquelle (1) zur Bereitstellung der auf die Probe (10) gerichteten Anregungsstrahlung (a) und einer Detektoreinheit (16, 18) zur Erfassung der von der Probe (10) ausgehende Messstrahlung (m), wobei im Strahlengang der Anregungsstrahlung (a) und/oder im Strahlengang der Messstrahlung (m) ein akusto-optisches Filter (AOTF) (5, 13) vorgesehen ist. Erfindungsgemäß ist zur Anregung der Ultraschallschwingungen des akusto-optischen Filters (5, 13) ein Hochfrequenzgenerator (21, 22) vorgesehen, welcher eine Einheit (23, 14) zur Amplitudenmodulation in Form eines Rechteck-, Gauß-, Henning- oder Hammingfensters aufweist, wodurch ein optischer Schalter mit Schaltzeiten im µsec - Bereich realisierbar ist.

## Beschreibung

Die Erfindung betrifft eine Messeinrichtung sowie ein Verfahren zur Bestimmung zumindest eines Lumineszenz-, Fluoreszenz- oder Absorptionsparameters einer Probe, wobei die von einer Strahlungsquelle ausgehende Anregungsstrahlung auf die Probe gerichtet und die von der Probe ausgehende Messstrahlung von einer Detektoreinheit erfasst wird und die Anregungsstrahlung und/oder die Messstrahlung ein akusto-optisches Filter (AOTF) durchläuft.

In diesem Zusammenhang ist aus der EP 0 841 557 A2 eine Detektionseinrichtung bekannt geworden, mit welcher Proben, die in sogenannten Mikroplatten vorliegen, detektiert werden können. Die Detektionseinrichtung weist eine breitbandige Lichtquelle auf, welche die Anregungsstrahlung zur Verfügung stellt. Zwischen der Lichtquelle und der Probe ist eine "Tuning Section" angeordnet, mit welcher die für die Anregung benötigte Wellenlänge aus der breitbandingen Anregungsstrahlung eingestellt bzw. ausgewählt werden kann. Nach dem Durchtritt durch eine fokussierende Optik gelangt die Anregungsstrahlung auf die Probe und regt diese zur Abgabe einer Messstrahlung an. Die Messstrahlung gelangt in einer Reflexionsgeometrie in einen ersten Detektor oder in einer Absorptionsgeometrie in einen zweiten Detektor. Beide Detektoren sind mit einer Auswerteeinheit verbunden. Den einzelnen Detektoren ist jeweils eine bildgebende Optik sowie eine weitere "Tuning Section" vorgeschaltet, mit welcher die in den ersten bzw. zweiten Detektor gelangende Messstrahlung eingestellt bzw. ausgewählt werden kann.

Die "Tuning Section" in der EP 0 841 557 A2 kann auf unterschiedliche Art und Weise realisiert werden. Die einzelnen Ausführungsvarianten werden in vier Kategorien zusammengefasst und zwar werden dispersive Elemente, lichtbrechende Elemente, interferometrische Elemente und Filter verwendet. So werden beispielsweise optische Gitter eingesetzt, wobei die Wellenlänge durch eine Drehung des Gitters und Abbildung auf einen Spalt ausgewählt wird. Weiters ist es vorgesehen zwei im Strahlengang nacheinander angeordnete Filterräder vorzusehen, wobei ein Tiefpass- und ein Hochpassfilter verwendet wird, welche einen engen Wellenlängenbereich ausfiltern. Durch Drehen der Filter um deren radiale Achse kann die gewünschte Wellenlänge in einem bestimmten Bereich abgestimmt werden.

Nachteilig bei diesen Varianten, welche alle über bewegliche, optische Komponenten verfügen, ist der komplizierte Aufbau sowie die relativ langen Schaltzeiten beziehungsweise Einstellzeiten. Weiters sind derartige mechanische Systeme im Betrieb störungsanfällig und nicht in allen Anwendungsbereichen einsetzbar.

Weiters werden in der EP 0 841 557 A2 im Zusammenhang mit der "Tuning Section" auch akusto-optische Filter erwähnt, welche über keine mechanisch beweglichen Teile verfügen.

Derartige abstimmbare akusto-optische Filter (**A**cousto Optical **T**unable **F**ilter) beziehungsweise AOTF werden auch im Zusammenhang mit einer Fluoreszenzmesseinrichtung der WO 00/39545 A1 beschrieben. In dieser Messeinrichtung gelangt das Licht einer monochromatischen Lichtquelle durch ein akusto-optisches Filter auf die Probe, wobei die Messstrahlung durch dasselbe akusto-optische Filter auf zwei Detektoreinheiten gelenkt wird. Die Anregungsstrahlung und die Messstrahlung fallen somit innerhalb des akusto-optischen Filters zusammen und durchlaufen das Filter in entgegengesetzten Richtungen. Die aus dem akusto-optischen Filter austretende Messstrahlung bildet zwei zueinander orthogonal polarisierte Teilstrahlen aus und gelangt jeweils in eine der beiden Detektoreinheiten.

Das AOTF ist ein optisches (Schmalband)-Filter, bei welchem elektrisch angeregte Ultraschallschwingungen periodische Dichteschwankungen in einem doppelbrechenden Kristall (z.B. TeO₂) hervorrufen. Diese Schwingungen im Kristall werden durch einen außen angebrachten Ultraschallgeber (Piezokristall) erzeugt, durchlaufen den Kristall und bewirken räumlich periodische Dichteschwankungen, welche als sogenanntes Bragg-Gitter das einfallende Licht beugen.

Aus der US 4,663,961 A und der US 4,490,845 A sind Analysensysteme bekannt, welche entweder im Strahlengang der Anregungsstrahlung oder der Messstrahlung ein akusto-optisches Filter aufweisen. Wie in der US 4,663,961 A dargelegt, wird das akusto-optische Filter über einen Hochfrequenzgenerator frequenzmoduliert. Mit den bekannten Einrichtungen sind jedoch die für manche Anwendungsfälle gewünschten raschen Schaltzeiten nicht realisierbar.

Weiters ist in der US 5,357,097 A ein Verfahren und eine Vorrichtung zur Kontrolle akusto-optischer Filter geoffenbart. Dabei wird zur Anregung der Ultraschallschwingung des AOTF ein Hochfrequenzgenerator verwendet, der eine Einheit zur Frequenz- und Amplitudenmodulation aufweist. Die in diesem Zusammenhang angestellten Überlegungen beziehen sich allerdings nicht auf Messeinrichtungen oder Verfahren zur Bestimmung eines Lumineszenz-, Fluoreszenz-oder Absorptionsparameters einer Probe.

In den Fig. 1 und 2 wird das Funktionsprinzip eines AOTF dargestellt. Einfallendes unpolarisiertes, breitbandiges Licht L wird bei angelegter Hochfrequenz HF am Ultraschallgeber U in drei Strahlen (ordentlicher Strahl O und die beiden orthogonal polarisierten, außerordentlichen Strahlen A1 und A2) aufgesplittet.

Fig. 2 zeigt ein Intensitätsmaximum für die beiden außerordentlichen Strahlen A1 und A2 bei der von der eingestellten Hochfrequenz abhängigen Mittelwellenlänge λₘ sowie ein Intensitätsminimum für den ordentlichen Strahl O.

Die Auswahl des für die jeweilige Anwendung gewünschten Strahls kann entweder durch Einfügen von gekreuzten Polarisatoren vor und hinter dem AOTF oder einfach durch Ausblenden der ungewünschten Strahlen erfolgen.

Aufgabe der Erfindung ist es, ausgehend von den eingangs beschriebenen Detektions- und Fluoreszenzmesseinrichtungen ein Messverfahren sowie eine kompakte und betriebssichere Messeinrichtung unter Vermeidung mechanisch bewegter Komponenten vorzuschlagen, wobei insbesondere kurze Schaltzeiten und in weiterer Folge variable Filterbandbreiten der AOTF angestrebt werden sollen.

Erfindungsgemäß wir diese Aufgabe dadurch erfüllt, dass die Anregungsfrequenz zumindest eines akusto-optischen Filters amplitudenmoduliert wird, wobei der Anregungsfrequenz zur Realisierung eines optischen Schalters mit Schaltzeiten im µsec - Bereich eine Amplitudenmodulation in Form eines Rechteck-, Gauß-, Henning- oder Hammingfensters aufgeprägt wird. Wird die anliegende Hochfrequenz ein- und ausgeschaltet (bzw. die Amplitude entsprechend moduliert), wirkt das AOTF als optischer Schalter mit Schaltzeiten im µsec - Bereich, wobei die Einhüllende der Hochfrequenz (=Zeitfenster) die Schaltereigenschaften bestimmt.

In der Frequenzdomäne weisen diese Fensterfunktionen unterschiedliche Eigenschaften auf, welche sich auf die Filterbreite und das Auftreten von Nebenzipfel (sidelobs) beziehen. Das AOTF lässt sich mit allen diesen Fensterfunktionen amplitudenmodulieren, die Auswahl des geeigneten Fensters richtet sich nach der jeweiligen Aufgabenstellung.

Der HF-Generator ist mit einem entsprechenden Oszillator und Verstärker ausgestattet, sodass ein Frequenzsprung innerhalb der kürzest möglichen Zeit ohne Phasensprung realisierbar ist.

Die optische Umschaltzeit (Verschiebung der Durchlasskurve in einen anderen Wellenlängenbereich) bei einem Frequenzsprung ist im wesentlichen nur durch die Zeitdauer bestimmt, welche die Ultraschallwelle zum Durchlaufen des AOTF-Kristalls benötigt. Bei den verwendeten Kristallmaterialien und den verwendeten Abmessungen der Kristalle liegt diese Zeitspanne bei einigen µsec. Somit ist ein Durchfahren auch größerer Wellenlängenbereiche ohne Zeitverlust durch mechanische Vorgänge möglich.

Solange das AOTF im linearen Bereich betrieben wird, können auch zwei oder mehrere HF-Signale angelegt werden, d.h. man kann zwei oder mehrere Wellenlängen gleichzeitig messen. Dadurch sind für alle im weiteren beschriebenen Messverfahren auch dreidimensionale Spektralscans annähernd in Echtzeit möglich.

Das AOTF bietet außerdem die Möglichkeit, durch Aufprägen einer Amplitudenmodulation den Lichtstrahl mit vergleichsweise hoher Modulationsfrequenz zu modulieren. Damit ergibt sich die Möglichkeit, ein empfindliches PLL-Verfahren (Lock-In-Verstärker) zur Signalaufbereitung und Detektion zu verwenden.

Eine Messeinrichtung zur Bestimmung zumindest eines Lumineszenz-, Fluoreszenz- oder Absorptionsparameters einer Probe, mit einer Anregungslichtquelle zur Bereitstellung der auf die Probe gerichteten Anregungsstrahlung und einer Detektoreinheit zur Erfassung der von der Probe ausgehende Messstrahlung, wobei im Strahlengang der Anregungsstrahlung und/oder im Strahlengang der Messstrahlung ein akusto-optisches Filter (AOTF) vorgesehen ist, ist erfindungsgemäß dadurch gekennzeichnet, dass zur Anregung der Ultraschallschwingungen des akusto-optischen Filters ein Hochfrequenzgenerator vorgesehen ist, welcher eine Einheit zur Amplitudenmodulation in Form eines Rechteck-, Gauß-, Henning-oder Hammingfensters aufweist, wodurch ein optischer Schalter mit Schaltzeiten im µsec - Bereich realisierbar ist.

Die minimale Durchlassbandbreite eines AOTF ist normalerweise eine vom Kristallmaterial, Kristallstruktur, Temperatur etc. abhängige Größe, die elektrisch nicht weiter beeinflusst werden kann. Größere Bandbreiten können herkömmlich nur durch Integration über mehrere Messungen bei benachbarten, vorzugsweise überlappenden Wellenlängen gemessen werden. Erfindungsgemäß kann nun die Bandbreite des akusto-optischen Filters durch eine Frequenzmodulation der Anregungsfrequenz eingestellt oder variiert werden, d.h. eine Verbreiterung der Durchlasskurve wird durch Aufprägen einer Frequenzmodulation auf das HF-Signal erzielt.

In einer vorteilhaften Ausführungsvariante der Erfindung ist vorgesehen, dass zeitgleich die Intensitäten zweier außerordentlicher, orthogonal zueinander polarisierter Strahlen des in der Messstrahlung angeordneten akusto-optisches Filters gemessen und aus dem Verhältnis der Intensitäten die Depolarisation der Messstrahlung errechnet wird.

Der ordentliche Strahl wird entweder durch Blenden oder durch gekreuzte Polarisatoren, welche im Strahlengang vor und hinter dem AOTF angeordnet sind, ausgeblendet. Die beiden verbleibenden, außerordentlichen Strahlen weisen zueinander orthogonal stehende Polarisationsebenen auf. Misst man daher diese beiden Strahlen mit jeweils einem eigenen Detektor, lassen sich die Energien bzw. Intensitäten beider Strahlen gleichzeitig bestimmen (Anwendung: Polarisationsfluoreszenz).

Die Erfindung wird im folgenden anhand von zum Teil schematischen Zeichnungen näher erläutert. Es zeigen:

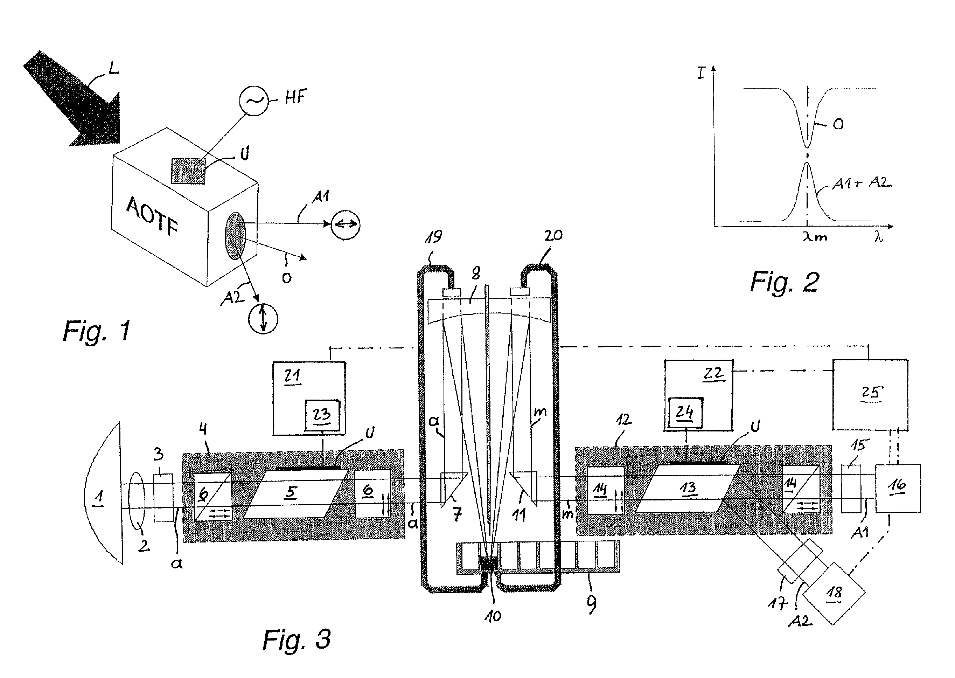

- Fig. 1: das Funktionsprinzip eines AOTF,
- Fig. 2: die Intensität des ordentlichen Strahls O und der beiden außerordentlichen Strahlen A1 und A2 in Abhängigkeit von der Wellenlänge λ,
- Fig. 3: den schematischen Aufbau einer erfindungsgemäßen Messeinrichtung,

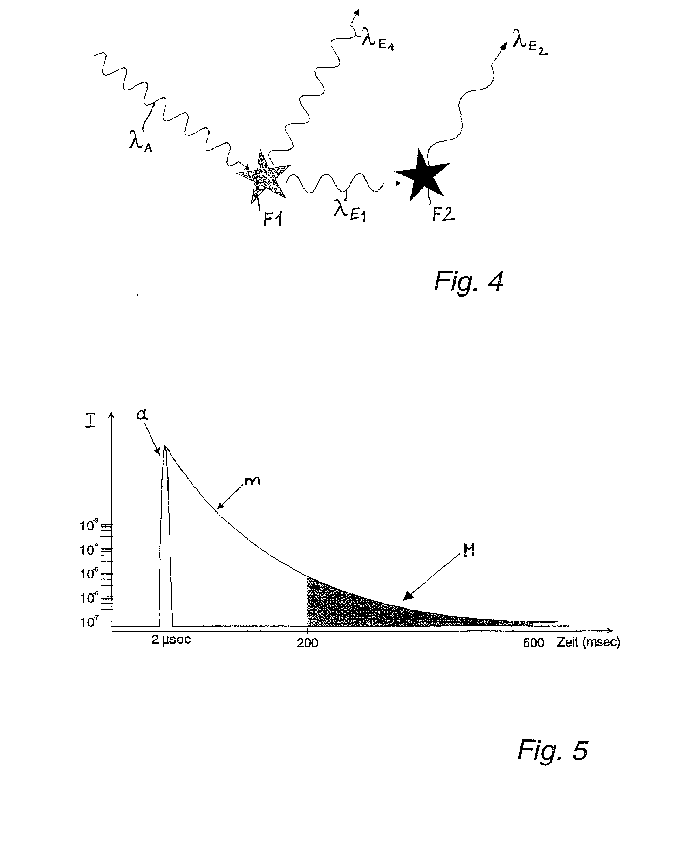

- Fig. 4: das Prinzip des erfindungsgemäßen Messverfahrens anhand der Transmissionsfluoreszenz sowie
- Fig. 5: das Prinzip des erfindungsgemäßen Messverfahrens anhand der Time resolved Fluoreszenz.

Die in Fig. 3 beispielhaft dargestellte Messeinrichtung zur Bestimmung zumindest eines Lumineszenz- Fluoreszenz- oder Absorptionsparameters einer Probe weist eine breitbandige Anregungslichtquelle 1 auf, welche die Anregungsstrahlung a zur Verfügung stellt. Ausgehend von der Lichtquelle 1 durchsetzt die Anregungsstrahlung a eine fokussierende Optik 2, ein Blockungsfilter 3 und tritt in eine Anregungseinheit 4 ein. Die Anregungseinheit weist ein akusto-optisches Filter 5 und jeweils vor- beziehungsweise nachgeschaltete Polarisatoren 6 auf. Der aus der Anregungseinheit 4 austretende Strahl gelangt über einen Umlenkspiegel oder ein Umlenkprisma 7 und einen weiteren Umlenk- bzw. Fokussierspiegel 8 auf die in einer Mikroplatte 9 angeordnete Probe 10. Die von der Probe 10 ausgehende Messstrahlung m gelangt über den Fokussierspiegel 8 und einen Umlenkspiegel bzw. ein Umlenkprisma 11 in eine Emissionseinheit 12. Die Emissionseinheit 12 weist - ähnlich wie die Anregungseinheit 4 - ein akusto-optisches Filter 13 sowie zwei Polarisatoren 14 auf. Der außerordentliche Strahl A1 gelangt über ein Blockungsfilter 15 in einen ersten Detektor 16, der außerordentliche Strahl A2 über ein Blockungsfilter 17 in einen zweiten Detektor 18. Der eben beschriebene Strahlengang beschreibt die Messung der Probe 10 von oben (Top Reading), weiters ist es auch möglich die Probe durch den Boden der Mikroplatte 9 zu messen (Bottom Reading), wofür die Lichtleiter 19 und 20 verwendet werden.

Bei Verwendung einer monochromatischen Lichtquelle kann die Anregungseinheit 4 entfallen. Anstelle der Mikroplatte 9 können auch andere Behältnisse aus Glas, Quarzglas oder Kunststoff, beispielsweise Petrischalen, Küvetten oder Röhrchen, verwendet werden. Zumindest einer beiden AOTF in der Anregungsstrahlung a bzw. in der Messstrahlung m weist einen auf den Ultraschallgeber U wirkenden Hochfrequenzgenerator 21 bzw. 22 auf, welcher eine Einheit 23 bzw. 24 zur Frequenz- und/oder Amplitudenmodulation umfasst. Mit 25 ist eine Steuer- und Auswerteeinheit der Messeinrichtung gekennzeichnet.

Mit der Messeinrichtung gemäß Fig. 3 können unterschiedliche Messverfahren mit einem Aufbau durchgeführt werden. Es folgen Anwendungsbeispiele:

### 1. Fluoreszenz:

### Intensitäts Fluoreszenz:

Die von einer breitbandigen Lichtquelle 1 ausgesandte Anregungsstrahlung a wird mittels geeigneter optischer Mittel (Blenden, Linsen, Spiegel, Prismen, Lichtleiter) durch ein schmalbandiges akusto-optisches Filter 5 geleitet, mittels welchem eine definierte Wellenlänge aus dem verfügbaren Farbspektrum der Lichtquelle 1 selektiert wird.

Die Anregungsstrahlung a wird nun für einen sehr kurzen Zeitraum (einige µsec) in die Probe 10 geleitet und der darin befindliche Fluorophor angeregt, wobei das akusto-optisches Filter 5 als schneller, optischer Schalter verwendet wird. Mit einer Latenz von etwa 2µsec beginnt der Fluorophor Messstrahlung m einer längeren Wellenlänge zu emittieren. Die Dauer der Emission liegt im Bereich von wenigen µsec bis zu msec.

Die Proben 10 können flüssig, fest oder gasförmig sein und befinden sich in Behältnissen 9 aus (Quarz-) Glas oder Kunststoff (Mikroplatten, Petrischalen, Küvetten, Röhrchen o.ä.).

Die Messstrahlung m wird nun mittels geeigneter optischer Mittel (Blenden, Linsen, Spiegel, Prismen, Lichtleiter) durch ein schmalbandiges akusto-optisches Filter 13 (Emissionsfilter) geleitet, welches die interessierende Messwellenlänge ausfiltert. Dieses Signal wird anschließend in einen hochsensiblen Detektor 16 geleitet, welcher das Lichtsignal in ein elektrisches Signal umsetzt. Im Falle der Polarisationsfluoreszenz-Messung kommt noch ein zweiter, unabhängig vom ersten arbeitender Detektor 18 hinzu.

Als Detektoren 16, 18 kommen hier vorwiegend Sekundärelektronen-Vervielfacher, aber auch Halbleiterdioden zur Anwendung. In der nachgeschalteten Elektronik der Auswerteeinheit 25 wird das elektrische Signal weiterverarbeitet.

Neben der eben angeführten Methode, kommen weitere wichtige, im folgenden beschriebene Fluoreszenzmessverfahren zur Anwendung.

### Transmissions Fluoreszenz:

Hier ist - wie in Fig. 4 skizziert - das Verhältnis von zwei Emissionswellenlängen λ_{E1} und λ_{E2} von Interesse. Ein mit λ_{A} angeregter Fluorophor F1 emittiert Licht als Anregungswellenlänge eines zweiten Fluorophors F2. Misst man nun beide emittierten Signale, so lässt sich daraus das Verhältnis der beiden aktiven Fluorophore F1 und F2 bestimmen. Die Anregungsstrahlung λ_{A} wird von einem AOTF zur Verfügung gestellt.

Der kritische Faktor dabei ist die Umschaltzeit des emissionsseitigen AOTF zwischen den beiden Wellenlängen λ_{E1} und λ_{E2}, da beide Emissionssignale möglichst gleichzeitig gemessen werden sollten.

Der Einsatz des AOTF bietet Umschaltzeiten von wenigen µsec. Damit ist der Wellenlängenwechsel um mehrere Zehnerpotenzen schneller zu bewerkstelligen als mit herkömmlich verwendeten mechanisch bewegten Interferenzfiltern oder Beugungsgittern.

### Time resolved Fluoreszenz:

Hier ist der Verlauf der emittierten Energie von Interesse. Manche Fluorophore, speziell solche mit ionisierten Lanthaniden (z.B. Europium Eu³⁺), emittieren nach der Anregung vergleichsweise lange ein Fluoreszenzsignal. Beispielsweise ist eine Messdauer von 400 ms erforderlich, welche exakt 200 ms nach der Anregung erfolgen muss. Die entsprechenden Daten sind dem Diagramm gemäß Fig. 5 zu entnehmen, wo die Intensität I der Anregungsstrahlung a sowie der Messstrahlung m in Abhängigkeit der Zeit aufgetragen ist. Die Messwertaufnahme erfolgt durch Integration über den Bereich M.

Die Hauptschwierigkeit besteht im Auftreten sehr hoher Lichtenergien bei der Anregung, wobei die Küvetten, Lösungsmittel etc. viel Fremdlicht im Wellenlängenbereich der Messstrahlung erzeugen (=Hintergrundstrahlung), sowie im raschen zeitlichen Abfall der Lichtenergie.

Es muss daher der kurze Lichtblitz bei der Anregung vom Detektor ferngehalten werden, andererseits soll der Detektor sehr empfindlich ausgelegt sein. Diese Notwendigkeiten erfordern eine Messeinrichtung mit einem sehr schnellen Shutter (=Verschluss bzw. optischer Ein-/Ausschalter für den Detektor) und ein Filtersystem mit möglichst hoher Transmission.

Herkömmliche Systeme verwenden mechanische Shutter mit entsprechenden zeitlichen Ungenauigkeiten, sowie Filtertechniken mit vergleichsweise niedrigen Transmissionswerten.

Die erfindungsgemäße Lösung mit einem amplitudenmodulierten AOTF als Schmalbandfilter bietet im Vergleich einerseits einen "elektronischen" Shutter mit einem vernachlässigbaren zeitlichen Jitter unter 1 µsec und wesentlich höheren Transmissionswerten (abhängig vom verwendeten Kristallmaterial) als herkömmliche Filter (Interferenz- oder Beugungsgitter).

Beide Eigenschaften kommen der Stabilität und der Empfindlichkeit der Messungen zugute. Durch die hervorragenden Eigenschaften des AOTF als Shutter kann der Messbeginn und das Messende genau definiert werden.

### Polarisations Fluoreszenz:

Hier ist die Bewegung von Molekülen im Medium von Interesse. Diese Bewegung bedingt eine Depolarisation der Messstrahlung m. Die Probe 10 wird mit polarisiertem Licht angeregt, gemessen werden die beiden, orthogonal zueinander liegenden Polarisationsebenen A1 und A2 der Messstrahlung. Aus dem Verhältnis der beiden Messungen (Detektor 16 bzw. 18) kann in der Auswerteeinheit 25 die Depolarisation errechnet werden.

Bei herkömmlichen Filtersystemen mit Interferenzfiltern oder Beugungsgittern sind entweder mechanisch bewegte Polarisationsfilter auf beiden Seiten in den Lichtstrahl geschaltet oder Polarisatoren am Eintritt von zwei Lichtleitern (mit geringsten Durchmessern) angeordnet.

Die hier angewandte Lösung mit AOTF macht sich die Eigenschaft zunutze, dass die beiden Polarisationsebenen bereits im Kristall getrennt werden und als separierte Signale aus diesem austreten. Beide Signale werden gleichzeitig mit getrennten Meßsystemen erfasst und entsprechend weiterverarbeitet.

Damit wird die massive Beschränkung einer mechanischen Umschaltung der Polarisationsfilter eliminiert.

### 2. Chemi-Lumineszenz:

Eine chemische Reaktion in der Messküvette liefert als Ergebnis einen Lichtblitz (Flash Lumineszenz) oder ein langsam abfallendes Lichtsignal (Glow Lumineszenz), dessen Intensität und Dauer von der Konzentration der/des gesuchten Stoffe(s) in der Probe abhängt.

Das durch die chemische Reaktion emittierte Licht wird äquivalent zu dem bereits bei der Intensitäts-Fluoreszenz beschrieben Verfahren gemessen. Da durch die chemische Reaktion die Probe faktisch zerstört wird, sind keine Messwiederholungen möglich.

Mehrfachbestimmungen in einer Probe erforderten daher bisher jeweils eigene, voneinander völlig getrennte Testabläufe. Erfindungsgemäß kann man nun mittels frequenz- und/oder amplitudenmodulierter AOTF innerhalb der Reaktionszeit mehrere unterschiedliche Wellenlängen schnell genug messen.

### 3. Absorption:

Durch eine chemische Reaktion innerhalb der Probe wird die Absorption bei einer bestimmten (für den Stoff charakteristischen) Wellenlänge beeinflusst.

Das wellenlängenselektierte Licht wird durch die Probe gesendet und von dieser je nach Verfärbungsgrad mehr oder weniger absorbiert. Die transmittierte Lichtmenge wird gemessen und üblicherweise im log. Maßstab als Absorption ausgegeben. Durch gleichzeitige Referenzmessungen in reaktionsunempfindlichen Wellenlängenbereichen können (optisch wirksame) Artefakte unterdrückt werden.

Durch die erfindungsgemäße Messvorrichtung ergeben sich zusammenfassend folgende Vorteile:
- Die Umschaltung zwischen den erforderlichen Wellenlängen im Strahlengang der Anregungs- und/oder Messstrahlung erfolgt rein elektrisch im µsec Bereich und ist daher um einige Zehnerpotenzen schneller als bei mechanischen Systemen.
- Es können mehrere Wellenlängen gleichzeitig oder schnell hintereinander gemessen werden.
- Durch Frequenzmodulation oder Integration über mehrere Wellenlängen lässt sich die Filterbandbreite einstellen bzw. variieren.
- Durch drastische Verkürzung der Zeit für einen Wellenlängenwechsel sind für alle beschriebenen Messverfahren dreidimensionale Messungen (z.B. der Variablen: Energie bzw. Intensität, Anregungs- oder Emissionswellenlänge, Zeitdauer) problemlos durchzuführen.
- Durch die beschriebenen optischen Schaltereigenschaften des AOTF ist es für die Fluoreszenzmessung möglich, die Anregungsstrahlung einer Konstantlichtquelle zu modulieren oder zu zerhacken und somit die Effekte "Bleaching" (Überstrahlung) und "Quenching" (Eigenabsorption) zu minimieren bzw. zu unterdrücken.
- Durch diese Schaltereigenschaft und den Effekt, mit einer Konstantlichtquelle extrem kurze Lichtblitze zu erzeugen, kann auf teure Blitzlampen (z.B. Xenon Blitzlampe) verzichtet werden. Dies hat weiters den Vorteil, dass spezielle Netzteile für diese Blitzlampe entfallen können, die Probleme bei der elektromagnetischen Verträglichkeit (EMV) verursachen könnten.
- Durch die zueinander orthogonal polarisierten außerordentlichen Strahlen eines AOTF, ist es für die Fluoreszenzmessung auf einfache Art (ohne mechanische oder elektrische Umschaltung) möglich, beide Polarisationsebenen gleichzeitig zu messen.
- AOTF sind durch fehlende mechanisch bewegte Komponenten sehr betriebssicher und durch kompakten Einbau resistent gegen Verschmutzung etc.
- AOTF sind langlebiger als mechanisch bewegte Komponenten, bei entsprechendem Einbau auch unempfindlich gegen Luftfeuchtigkeit etc.
- AOTF haben bei Auswahl geeigneter Kristalle hohe Transmissionen im Vergleich zu Beugungsgittern und Interferenzfiltern.

## Patentansprüche

1. Verfahren zur Bestimmung zumindest eines Lumineszenz-, Fluoreszenz-oder Absorptionsparameters einer Probe, wobei die von einer Strahlungsquelle ausgehende Anregungsstrahlung auf die Probe gerichtet und die von der Probe ausgehende Messstrahlung von einer Detektoreinheit erfasst wird und die Anregungsstrahlung und/oder die Messstrahlung ein akusto-optisches Filter (AOTF) durchläuft, **dadurch gekennzeichnet, dass** die Anregungsfrequenz zumindest eines akusto-optischen Filters amplitudenmoduliert wird, wobei der Anregungsfrequenz zur Realisierung eines optischen Schalters mit Schaltzeiten im µsec - Bereich eine Amplitudenmodulation in Form eines Rechteck-, Gauß-, Henning- oder Hammingfensters aufgeprägt wird.

2. Verfahren nach Anspruch 1, **dadurch gekennzeichnet, dass** die Bandbreite des akusto-optischen Filters durch eine Frequenzmodulation der Anregungsfrequenz eingestellt oder variiert wird.

3. Verfahren nach Anspruch 1 oder 2, **dadurch gekennzeichnet, dass** zeitgleich die Intensitäten zweier außerordentlicher, orthogonal zueinander polarisierter Strahlen des in der Messstrahlung angeordneten akusto-optisches Filters gemessen und aus dem Verhältnis der Intensitäten die Depolarisation der Messstrahlung errechnet wird.

4. Messeinrichtung zur Bestimmung zumindest eines Lumineszenz-, Fluoreszenz- oder Absorptionsparameters einer Probe (10), mit einer Anregungslichtquelle (1) zur Bereitstellung der auf die Probe gerichteten Anregungsstrahlung (a) und einer Detektoreinheit (16, 18) zur Erfassung der von der Probe (10) ausgehende Messstrahlung (m), wobei im Strahlengang der Anregungsstrahlung (a) und/oder im Strahlengang der Messstrahlung (m) ein akusto-optisches Filter (AOTF) (5, 13) vorgesehen ist, **dadurch gekennzeichnet, dass** zur Anregung der Ultraschallschwingungen des akusto-optischen Filters (5, 13) ein Hochfrequenzgenerator (21, 22) vorgesehen ist, welcher eine Einheit (23, 14) zur Amplitudenmodulation in Form eines Rechteck-, Gauß-, Henning- oder Hammingfensters aufweist, wodurch ein optischer Schalter mit Schaltzeiten im µsec - Bereich realisierbar ist.
